# EUROPEAN PATENT SPECIFICATION

(11) **EP 1 151 275 B1**
(45) Date of publication and mention of the grant of the patent: **21.12.2005**
(21) Application number: 99951468.0
(22) Date of filing: 17.09.1999
(51) Int. Cl.: G01N 21/35, G01N 21/33, G01J 3/10

(54) **REMOTE EMISSIONS SENSING SYSTEM AND METHOD WITH A COMPOSITE BEAM OF IR AND UV RADIATION THAT IS NOT SPLIT FOR DETECTION**
VORRICHTUNG UND VERFAHREN ZUM FERNNACHWEIS VON EMISSIONEN MIT EINEM AUS IR- UND UV-STRAHLUNG ZUSAMMENGESETZTEN STRAHL, DER ZUM NACHWEIS NICHT GETEILT WIRD
SYSTEME ET PROCEDE DE DETECTION D'EMISSIONS DISTANTES, AVEC UTILISATION D'UN FAISCEAU COMPOSITE A BASE DE RAYONNEMENT INFRAROUGE ET ULTRAVIOLET QUI EST NON DIVISE AUX FINS DE DETECTION

(30) Priority: 17.09.1998 US 100731 P
(43) Date of publication of application: 07.11.2001
(73) Proprietor: Envirotest Systems, Inc., Tucson, AZ 85745 (US)
(72) Inventor: DIDOMENICO, John, D., Tucson, AZ 85749 (US); RENDAHL, Craig, S., Tucson, AZ 85741 (US)
(74) Representative: Beck, Simon Antony
(86) International application number: PCT/US1999/021287
(87) International publication number: WO 2000/016070

(56) References cited:
- US-A- 5 498 872
- US-A- 5 563 420
- US-A- 5 591 975
- US-A- 5 644 133
- GUENTHER P L ET AL: "A HYDROCARBON DETECTOR FOR THE REMOTE SENSING OF VEHICLE EXHAUST EMISSIONS" REVIEW OF SCIENTIFIC INSTRUMENTS, AMERICAN INSTITUTE OF PHYSICS. NEW YORK, US, vol. 66, no. 4, 1 April 1995 (1995-04-01), pages 3024-3029, XP000501100 ISSN: 0034-6748

## Description

### FIELD OF THE INVENTION

The invention relates to a remote emissions sensing system and method that uses a composite detector beam of infrared (IR) and ultraviolet (UV) radiation. The detector beam is used to perform spectroscopic measurements upon an emissions source and the beam is not split during detection.

### BACKGROUND OF THE INVENTION

Remote emissions sensing systems generally are known. One such system comprises a source of electromagnetic radiation arranged to pass a beam of radiation through the exhaust plume of a motor vehicle as the motor vehicle passes by the system, and one or more detectors arranged to receive the radiation after it passes through the exhaust plume of the vehicle. Filters may be associated with one or more detectors to detect the intensity of electromagnetic radiation at a particular wavelength or range of wavelengths. The wavelengths may be selected to correspond to wavelengths absorbed by molecular species of interest in an exhaust plume (*e.g*., HC, CO, CO₂, NOₓ, or other molecular species). The detector's output voltage represents the intensity of the electromagnetic radiation measured by that detector. The voltages are input to a processor. The processor calculates the difference between the known intensity of the electromagnetic radiation source and the intensity detected by the detectors to determine the amount of absorption by particular molecular species (based on predetermined wavelengths associated with that species). Based on the measured absorption(s), the concentration of one or more molecular species in the emissions may be determined in a known manner. Such systems generally take a plurality of measurements (*e.g*., 50) over a predetermined period of time (*e.g*., 0.5 seconds). These measurements are then plotted and analyzed to determine concentrations of target emissions. When using a plurality of measurements, however, if one or more measurements are inaccurate, concentration calculations may be erroneous or invalid. For various reasons, inaccuracies can occur when remotely sensing emissions.

Some remote emission sensing systems do not have the capability to detect nitrous oxides (NOₓ). Other systems detect NOₓ with a UV beam and other molecular species with an IR beam. In one such system, the UV and IR beams are split into separate beams at the detector module. One reason for this splitting is that unequal detection times have been believed necessary for the UV and IR portions of the beam. For example, a longer UV detection time has been believed necessary to ensure adequate NOₓ detector signal. One problem with such a system is that unequal detection times require additional system elements which increase the difficulty in aligning the system. Other drawbacks exist. A system of this type is disclosed in US 5,498,872.

### SUMMARY OF THE INVENTION

According to a first aspect of the present invention there is provided a system for remotely detecting emissions, the system comprising: a radiation source for generating a combined beam of ultraviolet and infrared radiation that propagates along a predetermined path; a detector module for receiving the combined beam of radiation and measuring at least one parameter indicative of the relative concentration of at least one emission constituent; the detector module comprising at least one detector arranged to produce an output proportional to at least one characteristic of the received combined beam; a first beam director that directs the combined beam without splitting the combined beam towards a second beam director that sequentially directs the combined beam to a plurality of focussing mirrors that direct the combined beam to a respective detector characterised in that the combined beam is not split during detection such that the combined beam is directed sequentially to the detectors without splitting the combined beam.

It is thus possible to provide a remote emissions sensing system and method with a composite beam of IR and UV radiation that detects NOₓ and at least one other molecular species, where the alignment of the system is relatively easier than the alignment of a system wherein the UV and IR beams are split for detection.

According to a second aspect of the present invention there is provided a method for remotely detecting emissions, the method comprising: generating a combined beam of ultraviolet and infrared radiation that propagates along a predetermined path, wherein the predetermined path is chosen to intersect at least a portion of an emissions plume; receiving the combined beam at a detector module; sequentially directing the combined beam by a rotating mirror to a plurality of focusing beam directors, without splitting the combined beam; focusing the combined beam to a plurality of radiation detectors without splitting the combined beam; and measuring at least one parameter indicative of the relative concentration of at least one emission plume constituent.

### BRIEF DESCRIPTION OF THE DRAWINGS

FIG. 1 is a schematic block diagram that depicts the overall remote emissions sensing system in accordance with one embodiment of the present invention; and
FIG. 2 is a schematic diagram of the detector optics module used in the remote sensing system according to one embodiment of the invention.

### DESCRIPTION OF THE PREFERRED EMBODIMENT

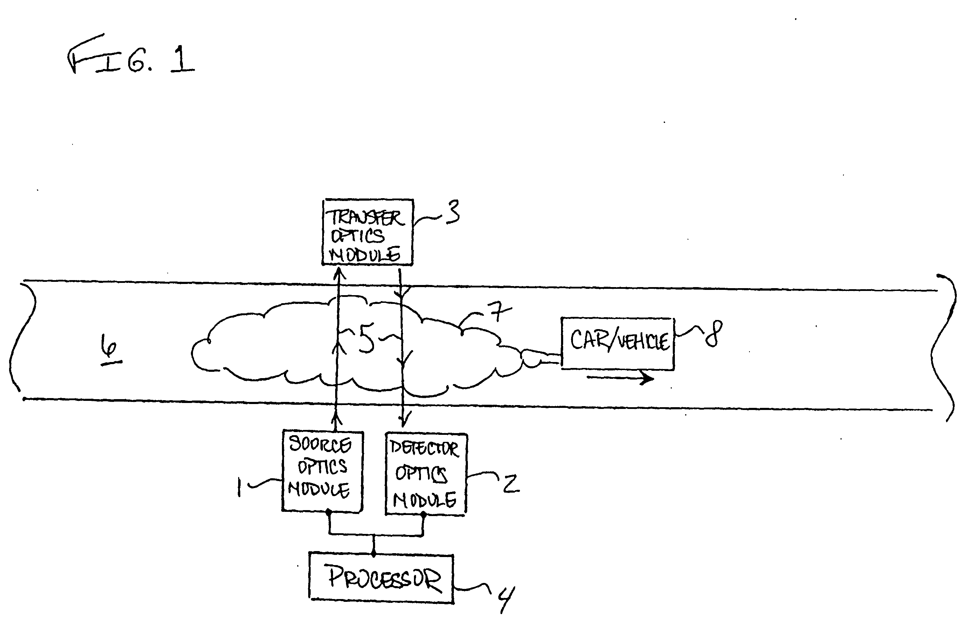

FIG. 1 depicts one embodiment of a remote sensing exhaust emission detector system in accordance with the present invention. According to this embodiment, the exhaust emission detector system includes: source optics module 1, detector optics module 2, transfer optics module 3, and processor 4. According to one embodiment of the invention, the processor 4 is operatively connected to both source optics module 1 and detector optics module 2.

Source optics module 1 may include one or more sources of electromagnetic radiation which generates and emits a radiation beam 5 which may be collimated. According to one embodiment of the invention, the beam 5 emitted at source optics module 1 may include at least infrared (IR) and ultraviolet (UV) radiation. Other beam types are possible.

As shown in FIG. 1, beam 5 may be directed across a roadway 6 along a predetermined path where it may impinge upon transfer optics module 3 located opposite to source optics module 1. Transfer module 3 directs beam 5 back across roadway 6 to detector optics module 2. Other system configurations may be used. For example, according to one embodiment of the invention, transfer optics module 3 is not used at all. Instead, the source 1 and detector optics 2 may be disposed on opposite sides of the roadway such that detector optics module 2 receives beam 5 directly from source optics module 1. In any case, beam 5 is aligned to traverse a predetermined path that intersects at least a portion of an emissions source. In some embodiments, the emissions source may comprise an exhaust plume emitted from a car or other motor vehicle 8 that travels on roadway 6. When vehicle 8 passes along roadway 6, beam 5 may be aligned to pass through the exhaust plume 7 of the vehicle.

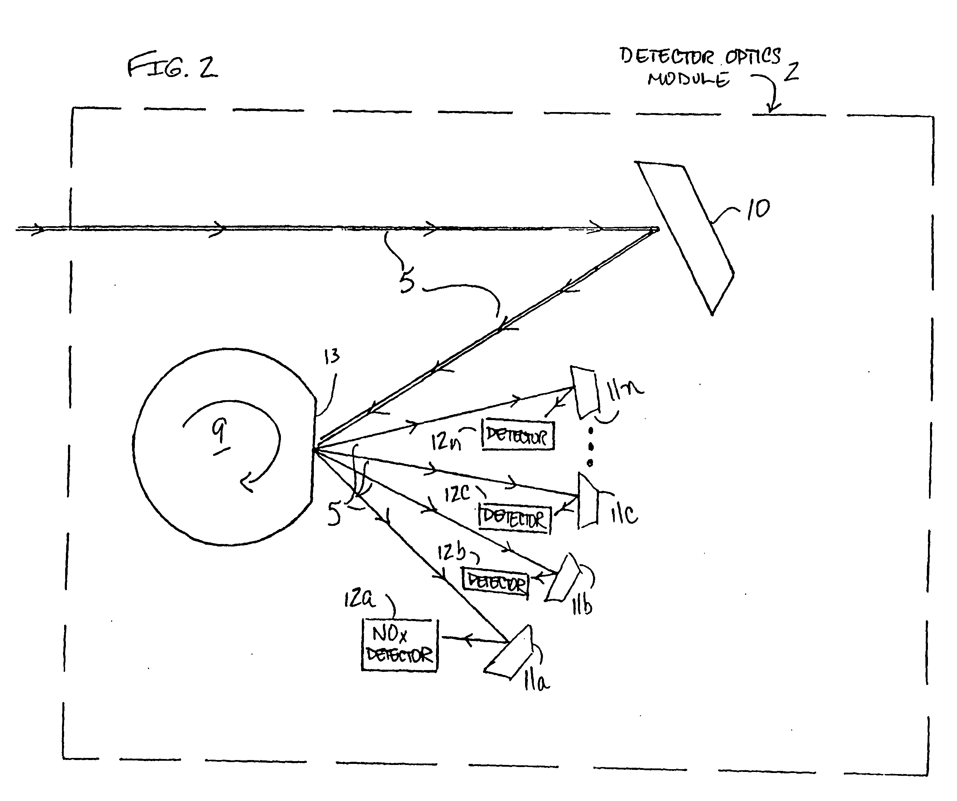

FIG. 2 is an illustration of one embodiment of detector optics module 2. The detector optics module 2 may be used to guide beam 5 to appropriate detectors. Beam 5 may be guided by any suitable configuration of beam guides. For example, lenses, mirrors, fiber optics and other elements may be used to guide beam 5. According to one embodiment of the invention, the incoming beam 5 may initially be directed onto a primary focusing mirror 10, as shown in FIG. 2. The primary focusing mirror 10 may be pivotally and rotatably mounted on a support that is attached to the base (not shown) of the detector optics module 2. Further, the primary focusing mirror 10 may, for example, be pivoted at an angle such that the mirror 10 reflects the incoming beam 5 onto the mirrored surface 13 of a rotating mirror assembly 9. Other configurations of detector optics module 2 are also possible. For example, primary focusing mirror 10 may be eliminated if beam 5 is configured to be directly incident upon appropriate detectors. Alternatively, additional focusing mirrors and optics (e.g., lenses, fiber optics, etc.) may be used in conjunction with primary focusing mirror 10.

Detector optics module 2 may also include additional elements to guide beam 5. For example, a rotating mirror 9 may be used. Rotating mirror assembly 9 may be located on top of a mount assembly (not shown) which may contain a drive motor to cause mirror assembly 9 to rotate. Such a mount assembly may be attached to the base of detector optics module. Although only one mirror is shown in FIG. 2, rotating mirror assembly 9 may also take the form of a multi-faceted structure, such as a dodecagon, where one or more sides of the structure may have a reflective surface.

As stated above, detector optics module 2 may be employed to guide beam 5 to appropriate detectors. Detector optics module 2 guides beam 5 in such a manner that beam 5 is not split during detection. Not splitting beam 5, among other things, simplifies the alignment of the system components. In one embodiment, beam 5 is guided, without splitting, by using guide elements that sequentially direct beam 5 to predetermined detector locations. For example, a rotating mirror 9 may be employed to guide beam 5 without splitting. As shown in FIG. 2, rotating mirror assembly 9 spins such that when beam 5 is incident upon the mirrored surface of the rotating mirror assembly 9, the beam 5 is reflected from the rotating mirror assembly 9 onto one or more secondary, focusing mirrors 11a-11n, in a sequential manner. According to one embodiment of the invention, one or more of these secondary mirrors may be horizontally aligned with rotating mirror assembly 9 such that the secondary mirrors 11a-11n reflect and focus the beam 5 onto one or more detectors 12a-12n. Alternatively, other optical systems may be used to spatially separate the incident beam 5 for delivery to the various detectors 12a - 12n. For example, lenses, mirrors, optical fibers, etc., may be used to deliver the incident beam 5 to detectors 12a - 12n.

At least one of detectors 12a-12n is capable of detecting and measuring nitrous oxides (NOₓ) without requiring beam 5 to be split. Preferably, the particular NOₓ detector used is capable of adequately detecting NOₓ concentrations (in a known manner) even when it is one of *n* detectors that are sequentially irradiated by beam 5 via rotating mirror 9. One example of a detector that is suitable for use in this embodiment is a real time photospectrometer. In one embodiment, a fiber optic light tube may be positioned at 12a and used to guide incident light into a photospectometer. Other detector schemes are possible.

As shown in FIG. 2, according to one embodiment of the invention, NOₓ detector 12a is operative to determine the amount of nitrous oxide in exhaust plume 7 by measuring the absorption of beam 5 at a wavelength corresponding to known absorption characteristics of NOₓ. This detector may, for example, take the form of a photo-multiplier tube, photo-diode detector, a photospectrometer utilizing charge coupled devices, or another suitable radiation detector. Preferably, a detector with sensitivity to radiation in the 220-230 nm wavelength range may be used to detect NOₓ. Such an NOₓ detector may also operate in conjunction an optical UV bandpass filter, not shown.

The other detectors 12b-12n may also include a HC detector, a CO detector, a CO₂ detector, and a reference detector. Other detectors operable to measure various emission components of an exhaust plume may also be included. These detectors are preferably chosen with the capability to detect radiation in the appropriate range for each exhaust constituent.

Other embodiments and uses of the invention will be apparent to those skilled in the art from consideration of the specification and practice of the invention disclosed herein. The specification and examples should be considered exemplary only. The scope of the invention is to be determined from the claims appended hereto.

## Claims

1. A system for remotely detecting emissions, the system comprising:
a radiation source (1) for generating a combined beam of ultraviolet and infrared radiation that propagates along a predetermined path;
a detector module (2) for receiving the combined beam of radiation and measuring at least one parameter indicative of the relative concentration of at least one emission constituent; the detector module comprising at least one detector arranged to produce an output proportional to at least one characteristic of the received combined beam;
a first beam director (10) that directs the combined beam without splitting the combined beam towards a second beam director (13) that sequentially directs the combined beam (5) to a plurality of focussing mirrors (11a, 11b, 11c, 11d) that direct the combined beam to a respective detector (12a, 12b, 12c, 12d) wherein the combined beam is not split during detection such that the combined beam is directed sequentially to the detectors (12a, 12b, 12c, 12d) without splitting the combined beam.

2. The system of claim 1, **characterised in that** the second beam director (13) comprises a rotating mirror.

3. The system of claim 1 or 2, **characterised in that** the at least one emission constituent comprises nitrous oxides.

4. The system as claimed in any one of the preceding claims, **characterised in that** at least one detector (12a, 12b, 12c, 12d) comprises a real time photospectrometer.

5. A method for remotely detecting emissions, the method comprising:
generating a combined beam of ultraviolet and infrared radiation that propagates along a predetermined path, wherein the predetermined path is chosen to intersect at least a portion of an emissions plume;
receiving the combined beam at a detector module;
wherein said detector module guides said combined beam so as to :
measure at least one parameter indicative of the relative concentration of at least one emission plume constituent.
sequentially direct the combined beam by a rotating mirror to a plurality of focusing beam directors, without splitting the combined beam; and
focus the combined beam to a plurality of radiation detectors without splitting the combined beam.

6. The method of claim 5, wherein the step of focusing the combined beam includes directing the combined beam to at least one detector that comprises a real time photospectrometer.

## Patentansprüche

1. System zur Fernerfassung von Emissionen mit:
einer Strahlungsquelle (1), mit der ein kombinierter Strahl aus Ultraviolett- und Infrarot-Strahlung erzeugbar ist, der sich entlang eines vorbestimmten Pfades fortpflanzt;
einem Detektormodul (2) zum Empfang des kombinierten Strahls, mit dem mindestens ein Parameter messbar ist, der die relative Konzentration mindestens eines Bestandteils der Emission angibt, wobei das Detektormodul mindestens einen Detektor aufweist, der angeordnet ist, ein Ausgangssignal abzugeben, das mindestens einer Eigenschaft des empfangenen kombinierten Strahls proportional ist; und
einer ersten Strahllenkvorrichtung (10), die den kombinierten Strahl ohne Aufspalten desselben auf eine zweite Strahllenkvorrichtung lenkt (13), die den Kombinationsstrahl (5) auf eine Vielzahl von Fokussierspiegeln (11a, 11b, 11c, 11d) lenkt, die den kombinierten Strahl einem zugehörigen Detektor (12a, 12b, 12c, 12d) zuleiten, wobei der kombinierte Strahl bei der Erfassung nicht aufgeteilt wird, so dass der kombinierte Strahl sequentiell auf die Detektoren (12a, 12b, 12c, 12d) gelenkt wird, ohne aufgeteilt zu werden.

2. System nach Anspruch 1, **dadurch gekennzeichnet, dass** die zweite Strahllenkvorrichtung (13) einen drehenden Spiegel aufweist.

3. System nach Anspruch 1 oder 2, **dadurch gekennzeichnet, dass** der mindestens eine Emissionsbestandteil Stickoxide aufweist.

4. System nach einem der vorgehenden Ansprüche, **dadurch gekennzeichnet, dass** mindestens ein Detektor (12a, 12b, 12c, 12d) ein Echtzeit-Photospektrometer aufweist.

5. Verfahren zur Fernerfassung von Emissionen, bei dem man:
einen kombinierten Strahl aus Ultraviolett- und Infrarot-Strahlung erzeugt, der sich entlang eines vorbestimmten Weges fortpflanzt, wobei der vorbestimmte Weg so gewählt ist, dass er mindestens einen Teil einer Emissionswolke schneidet; und
Empfangen des kombinierten Strahls durch ein Detektormodul, wobei das Detektormodul den kombinierten Strahl so führt, dass es:
mindestens einen Parameter misst, der die relative Konzentration mindestens eines Bestandteils der Emissionswolke anzeigt,
den kombinierten Strahl mittels eines Drehspiegels sequentiell auf eine Vielzahl fokussierender Strahllenkeinrichtungen lenkt, ohne den kombinierten Strahl aufzuteilen, und
den kombinierten Strahl auf eine Vielzahl von Strahlungsdetektoren fokussiert, ohne den Kombinationsstrahl aufzuteilen.

6. Verfahren nach Anspruch 5, bei dem man im Schritt des Fokussierens des kombinierten Strahls diesen auf mindestens einen Detektor lenkt, der ein Echtzeit-Photospektrometer aufweist.

## Revendications

1. Système pour détecter des émissions à distance, le système comprenant :
une source de rayonnement (1) pour générer un faisceau combiné de rayonnement ultraviolet et infrarouge qui se propage le long d'un chemin prédéterminé ;
un module de détecteur (2) pour recevoir le faisceau combiné de rayonnement et mesurer au moins un paramètre indiquant la concentration relative d'au moins un constituant des émissions; le module de détecteur comprenant au moins un détecteur arrangé pour produire une sortie proportionnelle à au moins une caractéristique du faisceau combiné reçu ;
un premier élément directeur de faisceau (10) qui dirige le faisceau combiné sans diviser le faisceau combiné vers un deuxième élément directeur de faisceau (13) qui dirige séquentiellement le faisceau combiné (5) vers une pluralité de miroirs de focalisation (11a, 11b, 11c, 11d) dirigeant le faisceau combiné vers un détecteur respectif (12a, 12b, 12c, 12d), dans lequel le faisceau combiné n'est pas divisé pendant la détection, de telle sorte que le faisceau combiné soit dirigé séquentiellement vers les détecteurs (12a, 12b, 12c, 12d) sans diviser le faisceau combiné.

2. Système selon la revendication 1, **caractérisé en ce que** le deuxième élément directeur de faisceau (13) comprend un miroir rotatif.

3. Système selon la revendication 1 ou 2, **caractérisé en ce que** le au moins un constituant des émissions comprend des oxydes nitreux.

4. Système selon l'une quelconque des revendications précédentes, **caractérisé en ce que** le au moins un détecteur (12a, 12b, 12c, 12d) comprend un spectrophotomètre en temps réel.

5. Procédé pour détecter des émissions à distance, le procédé comprenant :
la génération d'un faisceau combiné de rayonnement ultraviolet et infrarouge qui se propage le long d'un chemin prédéterminé, dans lequel le chemin prédéterminé est choisi pour couper au moins une partie d'un panache d'émissions;
la réception du faisceau combiné à un module de détecteur ;
dans lequel ledit module de détecteur guide ledit faisceau combiné de manière à:
mesurer au moins un paramètre indiquant la concentration relative d'au moins un constituant du panache d'émissions ;
diriger séquentiellement le faisceau combiné par un miroir rotatif vers une pluralité d'éléments directeurs de faisceau de focalisation, sans diviser le faisceau combiné ; et
focaliser le faisceau combiné en direction d'une pluralité de détecteurs de rayonnement divisant le faisceau combiné.

6. Procédé selon la revendication 5, dans lequel l'étape de focalisation du faisceau combiné comprend l'orientation du faisceau combiné vers au moins un détecteur comprenant un spectrophotomètre en temps réel.
